(19) Europäisches Patentamt
European Patent Office
Office européen des brevets

(11) **EP 3 728 462 B1**

(12) **EUROPEAN PATENT SPECIFICATION**

(45) Date of publication and mention
of the grant of the patent:
**24.05.2023 Bulletin 2023/21**

(21) Application number: **18816109.5**

(22) Date of filing: **18.12.2018**

(51) International Patent Classification (IPC):
**C08L 25/12** (2006.01)     **C08L 55/02** (2006.01)
**C08F 279/04** (2006.01)     **C08C 1/065** (2006.01)
**D06F 39/00** (2020.01)

(52) Cooperative Patent Classification (CPC):
(C-Sets available)
**C08L 25/12; C08C 1/065; C08F 279/04;
C08L 55/02; D06F 39/00**              (Cont.)

(86) International application number:
**PCT/EP2018/085434**

(87) International publication number:
**WO 2019/121643 (27.06.2019 Gazette 2019/26)**

(54) **HIGH FATIGUE RESISTANCE ABS**

ABS MIT HOHER ERMÜDUNGSBESTÄNDIGKEIT

ABS À RÉSISTANCE ÉLEVÉE À LA FATIGUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.12.2017 EP 17208465**

(43) Date of publication of application:
**28.10.2020 Bulletin 2020/44**

(73) Proprietor: **INEOS Styrolution Group GmbH
60325 Frankfurt (DE)**

(72) Inventors:
• **NIESSNER, Norbert
67159 Friedelsheim (DE)**
• **MICHELS, Gisbert
51375 Leverkusen (DE)**
• **WITTENBERG, Nils
65719 Hofheim am Taunus (DE)**
• **MADHAV, Shridhar
Vadodara 390002 (IN)**
• **DEBATA, Nirmalendu
Vadodara, Gujarat 391740 (IN)**
• **GEVARIA, Kirit
Vadodara 390008 (IN)**

(74) Representative: **Jacobi, Markus Alexander
Patentanwälte
Isenbruck Bösl Hörschler PartG mbB
Eastsite One
Seckenheimer Landstrasse 4
68163 Mannheim (DE)**

(56) References cited:
**EP-A2- 0 712 894          WO-A1-89/05836
WO-A1-2012/022710     WO-A1-2017/093468
CN-B- 102 532 786        US-A- 3 879 496**

(52) Cooperative Patent Classification (CPC): (Cont.)

C-Sets
**C08L 25/12, C08L 55/02**

**Description**

The invention is directed to ABS thermoplastic molding compositions having an improved fatigue resistance, balanced mechanical properties and a high ductility for applications demanding high endurance under cyclic loading conditions like spools, automotive components under load, home appliances vibrating due to moving parts and all such components which are under dynamic and static cyclic loading applications.

Conventionally, tough and ductile resins useful for high endurance applications are blends or hybrid composites of engineering polymers (such as polycarbonates) and polysiloxane derivatives. US 3,121,069 describes mechanical mixtures of styrene-containing thermoplastic high polymers (SBC, rubber modified styrene resin) and polyorganosiloxanes. US 2,924,545 discloses hard, tough, flex fatigue resistant thermoplastic mixtures of a butadiene-acrylonitrile rubbery copolymer, a resinous SAN-copolymer and a polyvinylchloride. US 6,362,269 deals with a resin composition having good wet heat fatigue properties composed of an aromatic polycarbonate (PC) resin or a blend of PC with a styrene-based resin and a reinforcing filler.

WO 2007/032901 discloses a fatigue resistant thermoplastic composition comprising a polycarbonate, a polysiloxane-polycarbonate, and a SAN copolymer. These blends have inherent limitations including a complex recipe formulation, high costs of manufacturing, a low melt flow and limited chemical resistance.

ABS (acrylonitrile-butadiene-styrene) is a versatile engineering copolymer with a wide range of applications including appliances, electronics, automotive etc. due to its unique features like dimensional stability, impact strength and ease of processing.

WO 2017/093468 A1 deals with thermoplastic molding materials having improved surface properties comprising a styrene-acrylonitrile-copolymer A and a mixture of at least two graft copolymers B-I and B-II (examples). Graft copolymer B-I is obtained via emulsion polymerization of a mixture of styrene and acrylonitrile monomers in the presence of a butadiene rubber latex (graft base) B1-A having a median particle diameter d50 in the range from 230 to 330 nm and a butadiene rubber latex B1-B having a median particle diameter d50 in the range from 340 to 480 nm; and graft copolymer B-II is obtained via emulsion polymerization of a mixture of styrene and acrylonitrile monomers in the presence of a butadiene rubber latex B1-C which has a median particle diameter d50 in the range from 10 to 220 nm.

WO 2014/170406 and WO 2014/170407 describe thermoplastic molding compositions based on ABS having improved mechanical and optical properties, which comprise a SAN-copolymer matrix A) and a graft copolymer B) composed of a graft substrate B1 (example 60 pbw) - an agglomerated butadiene rubber latex - and a SAN-graft sheath B2. The agglomerated graft base is obtained by agglomeration with an acrylate copolymer. Graft sheaths (B2) having an AN-content of 15 to 25 % are preferred. Exemplified SAN-copolymers have an AN-content of 25 wt.-% and a melt flow rate (MVR) at 220°C/10 kg of 64 ml/10 min.

The use of an acrylate copolymer for agglomeration results in a drop of the mechanical (e.g. impact strength and elongation at break) and flow properties of the obtained ABS molding compositions, hence said compositions are not suitable for applications demanding high endurance under cyclic loading conditions.

WO 2012/022710 describes ABS thermoplastic compositions having a high impact strength consisting of an ABS graft rubber polymer (I) and a SAN-copolymer (II) where the graft rubber polymer (I) is obtained by grafting of a mixture of agglomerated polybutadiene rubber latices (example 59.5 pbw) by feed and polymerization of styrene and acrylonitrile (AN-content example 28 wt.-%). The agglomerated rubber latices are obtained by agglomeration with acetic anhydride. The examples show mixtures of agglomerated rubber latices having particle sizes of 196 nm to 375 nm and 605 to 679 nm (bimodal) or of -320 nm (monomodal). SAN-copolymers (II) having an AN-content < 30 % are preferred (examples 23.5/28 wt.-%). Exemplified SAN-copolymers (II) have an MVR at 220°C/10 kg of 55/40/10 ml/10 min.

The mechanical properties like tensile strength or in particular break down force of said prior art ABS molding composition are often not suitable for applications demanding high endurance under cyclic loading conditions.

EP-A 0391178 describes an ABS resin composition having an improved impact resistance comprising an ABS graft copolymer obtained by emulsion graft copolymerization of styrene and acrylonitrile (AN-content 30 wt.-%) in the presence of an agglomerated butadiene rubber latex with particle sizes of 0.25 $\mu$m and 0.65 $\mu$m. The agglomerated rubber latex is obtained by agglomeration with acetic anhydride. The content of the graft shell is 50 wt.-%. The resin composition (examples) further comprises 80 wt.-% of a SAN copolymer (AN-content 26 wt.-%, MFI 28 g/10 min (220°C/10 kg)). Physical properties like impact strength and tensile strength of the obtained composition were tested.

The fatigue resistance is no topic of EP-A 0391178, but the fatigue resistance and the tensile strength of such resin compositions has to be improved for applications demanding high endurance under cyclic loading conditions.

It is one object of the current invention to provide thermoplastic ABS molding compositions having excellent fatigue resistance, balanced mechanical properties and high ductility which can be used for applications demanding high endurance under static or dynamic cyclic loading conditions.

One object of the invention is a thermoplastic molding composition comprising (or consisting of) components A, B and C

(A) 25 to 45 wt.-%, preferably 30 to 45 wt.-%, more preferably 35 to 45 wt.-%, of a graft copolymer (A) consisting of

50.5 to 55 wt.-%, preferably 51 to 54 wt.-% of a graft sheath (A2) and
45 to 49.5 wt.-%, preferably 46 to 49 wt.-% of a graft substrate (A1) - a mixture of agglomerated butadiene rubber latices (A1') and (A1") -, where (A1) and (A2) sum up to 100 wt.-%,
obtained by emulsion polymerization of
styrene and acrylonitrile in a weight ratio of 69.5/30.5 to 66/34, preferably 69/31 to 67/33, more preferably 69/31 to 67.5/32.5, to obtain a graft sheath (A2), it being possible for styrene and/or acrylonitrile to be replaced partially (less than 50 wt.-%) by alpha-methylstyrene, methyl methacrylate or N-phenylmaleimide or mixtures thereof, in the presence of at least one agglomerated butadiene rubber latex (A1') with a median weight particle diameter $D_{50}$ from 150 to 350 nm, preferably 200 to 300 nm, more preferably 200 to 270 nm, most preferred 220 to 250 nm, and at least one agglomerated butadiene rubber latex (A1") with a median weight particle diameter $D_{50}$ of 425 to 650nm, preferably 450 to 600 nm, more preferably 450 to 550 nm,
where the agglomerated rubber latices (A1') and (A1") are obtained by agglomeration of at least one starting butadiene rubber latex (S-A1) having a median weight particle diameter $D_{50}$ of equal to or less than 120 nm, preferably equal to or less than 110 nm, with at least one acid anhydride, preferably acetic anhydride or mixtures of acetic anhydride with acetic acid, in particular acetic anhydride;

(B) 55 to 75 wt.-%, preferably 55 to 70 wt.-%, more preferably 55 to 65 wt.-%, of at least one copolymer (B) of styrene and acrylonitrile in a weight ratio of from 70/30 to 66/34 , preferably 69.5/30.5 to 67/33, more preferably 69/31 to 67.5/32.5, it being possible for styrene and/or acrylonitrile to be partially (less than 50 wt.-%) replaced by alpha-methylstyrene, methyl methacrylate or N-phenylmaleimide or mixtures thereof; wherein copolymer (B) has a melt flow rate of 30 to 36 g/10 min (220°C/10 kg);

(C) 0 to 5 wt.-% of further additives and/or processing aids (C); where the components A, B and, if present, C, sum to 100 wt.-%.

If component (C) is present, its minimum amount is 0.01 wt.-%, based on the entire thermoplastic molding composition molding compound.
Wt.-% means percent by weight.
The median particle diameter $D_{50}$, also known as the $D_{50}$ value of the integral mass distribution, is defined as the value at which 50 wt.-% of the particles have a diameter smaller than the $D_{50}$ value and 50 wt.-% of the particles have a diameter larger than the $D_{50}$ value.
The MFI is determined according to ISO 1133 standard.
In the present application the weight-average particle diameter $D_w$, in particular the median particle diameter $D_{50}$, is determined with a disc centrifuge (e.g.: CPS Instruments Inc. DC 24000 with a disc rotational speed of 24 000 rpm). The weight-average particle diameter $D_w$ is defined by the following formula (see G. Lagaly, O. Schulz, R. Ziemehl, Dispersionen und Emulsionen: Einführung in die Kolloidik feinverteilter Stoffe einschließlich der Tonminerale, Darmstadt: Steinkopf-Verlag 1997, ISBN 3-7985 -1087-3, page 282, formula 8.3b):

$$D_w = sum ( n_i * d_i^4 ) / sum( n_i * d_i^3 )$$

$n_i$: number of particles of diameter $d_i$.
The summation is performed from the smallest to largest diameter of the particles size distribution. It should be mentioned that for a particles size distribution of particles with the same density which is the case for the starting rubber latices and agglomerated rubber latices the volume average particle size diameter $D_v$ is equal to the weight average particle size diameter $D_w$.
Preferably the thermoplastic molding composition of the invention comprises (or consists of):

25 to 45 wt.-% component (A),
54.99 to 74.99 wt.-% component (B),
0.01 to 5 wt.-% component (C).

More preferably the thermoplastic molding composition of the invention comprises (or consists of):

30 to 45 wt.-% component (A),
54.99 to 69.99 wt.-% component (B),

0.01 to 5 wt.-% component (C).

Most preferably the thermoplastic molding composition of the invention comprises (or consists of):

35 to 45 wt.-% component (A),
54.99 to 64.99 wt.-% component (B),
0.01 to 5 wt.-% component (C).

In addition to the mentioned components (A), (B) and (C), the inventive thermoplastic molding composition may contain further rubber-free thermoplastic resins (TP) not composed of vinyl monomers, such thermoplastic resins (TP) being used in amounts of up to 60 parts by weight, preferably up to 55 parts by weight (in each case based on 100 parts by weight of the total of (A), (B), and (C)).

The thermoplastic resins (TP) as the rubber-free copolymer in the thermoplastic molding composition according to the invention which can be used in addition to the mentioned components (A), (B) and (C), include for example polycondensation products, for example aromatic polycarbonates, aromatic polyester carbonates, polyesters, polyamides. Suitable thermoplastic polycarbonates, polyester carbonates, polyesters and polyamides are known and described on pages 14 to 18 of WO 2012/022710 A1.

Preferably the inventive thermoplastic molding composition does not contain further rubber-free thermoplastic resins (TP).

Component (A)

The graft copolymer (A) has a glass transition temperature Tg of < 0° C, preferably < -20° C, more preferably < -40° C. The glass transition temperature Tg is measured by dynamic mechanical analysis (DMA) using a frequency of 1 Hz.

Graft copolymer (A) is obtained by emulsion polymerization of styrene and acrylonitrile in a weight ratio of 69.5:30.5 to 66:34, preferably 69:31 to 67:33, more preferably 69:31 to 67.5:32.5, to obtain a graft sheath (A2), it being possible for styrene and/or acrylonitrile to be replaced partially (less than 50 wt.-%, preferably less than 20 wt.-%, more preferably less than 10 wt.-%, based on the total amount of monomers used for the preparation of (A2)) by by alpha-methylstyrene, methyl methacrylate or N-phenylmaleimide or mixtures thereof, in the presence of at least one agglomerated butadiene rubber latex (A1') with a median weight particle diameter d50 from 150 to 350 nm, preferably 200 to 300 nm, more preferably 200 to 270 nm, most preferred 220 to 250 nm, and at least one agglomerated butadiene rubber latex (A1") with a median weight particle diameter $D_{50}$ of 425 to 650 nm, preferably 450 to 600 nm, more preferably 450 to 550 nm.

Preferably graft copolymer (A) consists of 51 to 54 wt.-% of a graft sheath (A2) and 46 to 49 wt.-% of a graft substrate (A1).

More preferably graft copolymer (A) consists of 51 to 53 wt.-% of a graft sheath (A2) and 57 to 59 wt.-% of a graft substrate (A1).

Preferably the obtained graft copolymer (A) has a core-shell-structure; the graft substrate (a1) forms the core and the graft sheath (A2) forms the shell.

Preferably for the preparation of the graft sheath (A2) styrene and acrylonitrile are not partially replaced by one of the above-mentioned comonomers; preferably styrene and acrylonitrile are polymerized alone in a weight ratio of 69.5/30.5 to 66/34, preferably 69/31 to 67/33, more preferably 69/31 to 67.5/32.5.

The at least one, preferably one, starting butadiene rubber latex (S-A1) preferably has a median particle diameter $D_{50}$ of equal to or less than 110 nm, particularly equal to or less than 100 nm.

The term "butadiene rubber latex" means polybutadiene latices produced by emulsion polymerization of butadiene and up to 20 wt.-% (based on the total amount of monomers used for the production of polybutadiene polymers) of one or more diene and/or vinyl aromatic monomer that is copolymerizable with butadiene as comonomer.

Examples for such monomers include isoprene, chloroprene, styrene, alpha-methylstyrene, $C_1$-$C_4$-alkylstyrenes; preferably, butadiene is used alone or mixed with up to 20 wt.-%, preferably up to 15 wt.-%, styrene and/or alpha-methylstyrene, preferably styrene.

Preferably the starting butadiene rubber latex (S-A1) consists of 80 to 98 wt.-% of butadiene and 2 to 20 wt.-% styrene. More preferably the starting butadiene rubber latex (S-A1) consists of 85 to 97 wt.-% of butadiene and 3 to 15 wt.-% styrene. Graft copolymers (A) can be prepared by a process comprising the steps: α) synthesis of starting butadiene rubber latex (S-A1) by emulsion polymerization, β) agglomeration of latex (S-A1) with at least one acid anhydride to obtain an agglomerated butadiene rubber latex (A1') and (A"), γ - preferably common - grafting of the agglomerated butadiene rubber latices (A1') and (A1") (= graft substrate A1) to form a graft copolymer (A).

The synthesis (step α)) of starting butadiene rubber latex (S-A1) is described in detail on pages 5 to 8 of WO 2012/022710.

Preferably the starting butadiene rubber latices (S-A1) are produced by an emulsion polymerization process using metal salts, in particular persulfates (e.g. potassium persulfate), as an initiator and a rosin-acid based emulsifier.

As resin or rosin acid-based emulsifiers, those are being used in particular for the production of the starting rubber latices by emulsion polymerization that contain alkaline salts of the rosin acids. Salts of the resin acids are also known as rosin soaps. Examples include alkaline soaps as sodium or potassium salts from disproportionated and/or dehydrated and/or hydrated and/or partially hydrated gum rosin with a content of dehydroabietic acid of at least 30 wt.-% and preferably a content of abietic acid of maximally 1 wt.-%.

Furthermore, alkaline soaps as sodium or potassium salts of tall resins or tall oils can be used with a content of dehydroabietic acid of preferably at least 30 wt.-%, a content of abietic acid of preferably maximally 1 wt.-% and a fatty acid content of preferably less than 1 wt.-%. Mixtures of the aforementioned emulsifiers can also be used for the production of the starting rubber latices. The use of alkaline soaps as sodium or potassium salts from disproportionated and/or dehydrated and/or hydrated and/or partially hydrated gum rosin with a content of dehydroabietic acid of at least 30 wt.-% and a content of abietic acid of maximally 1 wt.-% is advantageous.

Preferably the emulsifier is added in such a concentration that the final particle size of the starting butadiene rubber latex (S-A1) achieved is from 60 to 110 nm, preferably 90 to 110 nm.

Polymerization temperature in the preparation of the starting rubber latices (S-A1) is generally 25°C to 160°C, preferably 40°C to 90°C. Further details to the addition of the monomers, the emulsifier and the initiator are described in WO 2012/022710. Molecular weight regulators, salts, acids and bases can be used as described in WO 2012/022710.

The gel content of the starting rubber latices (S-A1) is preferably 30 to 98% by wt., preferably 50 to 95% by wt. based on the water un-soluble solids of said latices. The values indicated for the gel content are based on the determination according to the wire cage method in toluene (see Houben-Weyl, Methoden der Organischen Chemie, Makromolekulare Stoffe, part 1 , page 307 (1961 ) Thieme Verlag Stuttgart).

The gel contents of the starting rubber latices (S-A1) can be adjusted in a manner known in principle by applying suitable reaction conditions (e.g., high reaction temperature and/or polymerization up to high conversion as well as, optionally, addition of substances with a cross-linking effect for achieving a high gel content, or, e.g., low reaction temperature and/or termination of the polymerization reaction prior to the occurrence of a cross-linkage that is too comprehensive as well as, optionally, addition of molecular-weight regulators such as, for example n-dodecylmercaptan or tert- dodecylmercaptan for achieving a low gel content).

The solid content of the starting rubber latices (S-A1) is preferably 25 to 55% by wt. (evaporation sample at 180°C for 25 min. in drying cabinet), more preferably 35 to 55% by wt., particularly preferably 40 to 55% by wt. The degree of conversion (calculated from the solid content of a sample and the mass of the substances used) of the monomers used in the emulsion polymerization preferably is larger than 50%, more preferably larger than 60%, particularly preferably larger than 70%, very particularly preferably larger than 80%, in each case based on the sum of monomers. Moreover, the degree of conversion of the monomers used is preferably lower than 99%, more preferably lower than 97%, particularly preferably lower than 96%, very particularly preferably lower than 95%, in each case based on the sum of monomers.

In step β) of the process according to the invention the afore-mentioned obtained starting butadiene rubber latex (S-A1) is subjected to agglomeration with at least one acid anhydride, preferably acetic anhydride or mixtures of acetic anhydride with acetic acid, in particular acetic anhydride, to obtain an agglomerated rubber latex (A1). Preferably acetic anhydride, more preferably in admixture with water, is used for the agglomeration.

Preferably the agglomeration step β) is carried out by the addition of 0.1 to 5 parts by weight of acid anhydride, preferably 0.1 to 5 parts by weight acetic anhydride, per 100 parts of the starting rubber latex (S-A1) solids. The amount of acid anhydride to be chosen for the particle size enlargement depends on the desired particle size of the agglomerated rubber latex (A1). The formation of larger particles generally requires higher amounts of acid anhydride, preferably acetic anhydride, within the afore-mentioned range.

The agglomerated rubber latex (A1) is preferably stabilized by addition of further emulsifier while adjusting the pH value of the latex (A1) to a pH value (at 20°C) between pH 7.5 and pH 11, preferably of at least 8, particular preferably of at least 8.5.

This is done in order to minimize the formation of coagulum and to increase the formation of stable agglomerated rubber latex (A1) with a uniform particle size.

As further emulsifier preferably rosin-acid based emulsifiers as described above in step α) are used. The pH value is adjusted by use of bases such as sodium hydroxide solution or preferably potassium hydroxide solution.

After agglomeration at least one agglomerated butadiene rubber latex (A1') with a median weight particle diameter d50 from 150 to 350 nm, preferably 200 to 300 nm, more preferably 200 to 270 nm, most preferred 220 to 250 nm, and at least one agglomerated butadiene rubber latex (A1") with a median weight particle diameter $D_{50}$ of 425 to 650 nm, preferably 450 to 600 nm, more preferably 450 to 550 nm, are obtained.

In step γ) the obtained agglomerated butadiene rubber latices (A1') and (A1") (= graft substrate A1) are - preferably commonly - grafted to form the graft copolymer (A).

Suitable grafting processes are described in detail on pages 12 to 14 of WO 2012/022710.

The weight ratio of the agglomerated butadiene rubber latices (A1') and (A1") used in process step γ) preferably is 50/50 to 90/10, more preferably 70/30 to 85/15, most preferred 75/25 to 85/15, in particular most preferred 78/22 to 82/18.

Graft copolymer (A) is obtained by emulsion polymerization of styrene and acrylonitrile - optionally partially replaced by alpha-methylstyrene, methyl methacrylate or N-phenylmaleimide or mixtures thereof - in a weight ratio of 69.5/30.5 to 66/34, preferably 69/31 to 67/33, more preferably 69/31 to 67.5/32.5, to obtain a graft sheath (A2) (in particular a graft shell) in the presence of the above-mentioned agglomerated butadiene rubber latices (A1') and (A1").

Preferably graft copolymer (A) has a core-shell-structure.

Graft copolymers (A) have a bi-, tri- or multimodal, preferably a bimodal, particle size distribution.

The number average molecular weight $M_n$ of the graft shell (determined by means of gel permeation chromatography (GPC) in THF as solvent, using polystyrene as standard) preferably is in the range of from 45,000 to 100,000 g/mol.

The grafting process is preferably carried out by common grafting of a mixture of the agglomerated rubber latices (A1') and (A1"). Preferably the graft polymerization is carried out by use of a redox catalyst system with cumene hydrogen peroxide as preferable initiator.

Preferably the graft comonomer mixture is added continuously to the mixture of the agglomerated rubber latices (A1') and (A1"), and polymerization is carried out till the reaction is completed.

Further details to polymerization conditions, emulsifiers, initiators, molecular weight regulators used in grafting step γ) are described in WO 2012/022710 A1.

Component B)

Preferably, copolymer (B) (component B) is a copolymer of styrene and acrylonitrile in a weight ratio of from 69.5/30.5 to 67/33, preferably 69/31 to 67.5/32.5, it being possible for styrene and/or acrylonitrile to be partially (less than 50 wt.-%) replaced by alpha-methylstyrene, methyl methacrylate or N-phenylmaleimide or mixtures thereof.

It is preferred that styrene and acrylonitrile are not partially replaced by one or more of the afore-mentioned co-monomers. Component (B) is preferably a copolymer of styrene and acrylonitrile. Copolymer B generally has an MFI at 220°C/10 kg of 30 to 36 g/10 min, preferably 31 to 35 g/10 min. The MFI is determined according to ISO 1133 standard. Details relating to the preparation of such copolymers are described, for example, in DE-A 2 420 358, DE-A 2 724 360 and in Kunststoff-Handbuch ([Plastics Handbook], Vieweg-Daumiller, volume V, (Polystyrol [Polystyrene]), Carl-Hanser-Verlag, Munich, 1969, pp. 122 ff., lines 12 ff.). Such copolymers prepared by mass (bulk) or solution polymerization in, for example, toluene or ethylbenzene, have proved to be particularly suitable.

Preferably the AN-content (or the styrene/acrylonitrile weight ratio) of copolymer (B) is approximately identical to the AN-content (or the styrene/acrylonitrile weight ratio) of the graft sheath (A2) of graft copolymer (A).

Component (C)

Various additives and/or processing aids (C) (= component (C)) may be added to the molding compounds according to the invention in amounts of from 0.01 to 5 wt.-% as assistants and processing additives. Suitable additives and/or processing aids (C) include all substances customarily employed for processing or finishing the polymers. Examples include, for example, dyes, pigments, colorants, fibers/fillers, antistats, antioxidants, stabilizers for improving thermal stability, stabilizers for increasing photostability, stabilizers for enhancing hydrolysis resistance and chemical resistance, anti-thermal decomposition agents, dispersing agents, and in particular external/internal lubricants and waxes that are useful for production of molded bodies/articles.

These additives and/or processing aids may be admixed at any stage of the manufacturing operation, but preferably at an early stage in order to profit early on from the stabilizing effects (or other specific effects) of the added substance.

Preferably component (C) is at least one dispersing agent, wax, lubricant and/or antioxidant.

Suitable lubricants/glidants and demolding agents include stearic acids, stearyl alcohol, stearic esters, amide waxes (bisstearylamide, in particular ethylenebisstearamide), polyolefin waxes and/or generally higher fatty acids, derivatives thereof and corresponding fatty acid mixtures comprising 12 to 30 carbon atoms.

Examples of suitable antioxidants include sterically hindered monocyclic or polycyclic phenolic antioxidants which may comprise various substitutions and may also be bridged by substituents. These include not only monomeric but also oligomeric compounds, which may be constructed of a plurality of phenolic units. Hydroquinones and hydroquinone analogs are also suitable, as are substituted compounds, and also antioxidants based on tocopherols and derivatives thereof. It is also possible to use mixtures of different antioxidants. It is possible in principle to use any compounds which are customary in the trade or suitable for styrene copolymers, for example antioxidants from the Irganox (R) group. In addition to the phenolic antioxidants cited above by way of example, it is also possible to use so-called co-stabilizers, in particular phosphorus- or sulfur-containing co-stabilizers. These phosphorus- or sulfur-containing co-stabilizers are known to those skilled in the art.

For further additives and/or processing aids, see, for example, "Plastics Additives Handbook", Ed. Gächter and Müller, 4th edition, Hanser Publ., Munich, 1996.

Specific examples of suitable additives and/or processing aids are mentioned on pages 23 to 26 of WO 2014/170406.

Preparation of Thermoplastic Molding Composition

The thermoplastic molding composition of the invention may be produced from the components (A), (B) and, if present, (C), and optionally further polymers (TP) by any known method. However, it is preferable when the components are premixed and blended by melt mixing, for example conjoint extrusion, preferably with a twin-screw extruder, kneading or rolling of the components. This is done at temperatures in the range of from 160°C to 400°C, preferably from 180°C to 280°C, more preferably 220° C to 250°. In a preferred embodiment, the component (A) is first partially or completely isolated from the aqueous dispersion obtained in the respective production steps.

For example, the graft copolymers (A) may be mixed as a moist or dry crumb/powder (for example having a residual moisture of from 1 to 40%, in particular 20 to 40%) with the matrix copolymer (B), complete drying of the graft copolymers (A) then taking place during the mixing. The drying of the particles may also be performed as per DE-A 19907136.

The thermoplastic molding compositions according to the invention have an excellent fatigue resistance with retention of chemical resistance, flow and key mechanical properties. This is due to the fact that the inventive compositions enable a perfect synergy between the graft copolymer (A) and the SAN-copolymer (B) due to the specific particle size of the agglomerated graft rubber (A1), the high ratio (50.5 wt.-% or more) and high AN-content (30.5 wt.-% or more) of the graft sheath (A2), in combination with a high AN-content of copolymer (B).

The invention further provides for the use of the described thermoplastic molding composition for the production of shaped articles. Processing may be carried out using the known processes for thermoplast processing, in particular production may be effected by thermoforming, extruding, injection molding, calendaring, blow molding, compression molding, press sintering, deep drawing or sintering. Preferred is the use of thermoplastic molding compositions according to the invention or shaped articles produced therefrom for applications demanding high endurance under cyclic (static or dynamic) loading conditions like spools (e.g. textile bobbins), automotive components under load and home appliances vibrating due to moving parts (e.g. washing- or dryer machine lids).

The invention is further illustrated by the examples and claims.

Examples

Test Methods

Particle Size $D_w/D_{50}$

For measuring the weight average particle size $D_w$ (in particular the median weight particle diameter $D_{50}$) with the disc centrifuge DC 24000 by CPS Instruments Inc. equipped with a low density disc, an aqueous sugar solution of 17.1 mL with a density gradient of 8 to 20% by wt. of saccharose in the centrifuge disc was used, in order to achieve a stable flotation behavior of the particles. A polybutadiene latex with a narrow distribution and a mean particle size of 405 nm was used for calibration. The measurements were carried out at a rotational speed of the disc of 24,000 r.p.m. by injecting 0.1 mL of a diluted rubber dispersion into an aqueous 24% by wt. saccharose solution. The calculation of the weight average particle size $D_w$ was performed by means of the formula

$$D_w = \text{sum} ( n_i * d_i^4 ) / \text{sum}( n_i * d_i^3 )$$

$n_i$: number of particles of diameter $d_i$.

Melt Flow Index (MFI) or Melt Volume Flow Rate (MFR)

MFI/MFR test was performed on pellets (ISO 1133 standard) using a MFI-machine of CEAST, Italy.

Notched Izod Impact Strength (NIIS)

Izod impact tests were performed on notched specimens (ASTM D 256 standard) using an instrument of CEAST (part of Instron's product line), Italy.

Tensile Test

Tensile tests on ABS blends were carried out (ASTM D 638 standard) at 23°C using a Universal testing Machine (UTM) of Lloyd Instruments, UK.

Flexural test

Flexural tests were carried out on ABS blends (ASTM D 790 standard) using a UTM of Lloyd Instruments, UK.

Heat deflection temperature (HDT)

Heat deflection temperature test was performed on injection molded specimen (ASTM D 648 standard) using a CEAST, Italy instrument.

VICAT Softening Temperature (VST)

Vicat softening temperature test was performed on injection molded test specimen (ASTM D 1525-09 standard) using a CEAST, Italy machine. Test is carried out at a heating rate of 120°C/hr (Method B) at 50 N loads.

Rockwell Hardness

Hardness of the injection molded test specimen (ISO - 2039/2-11) was tested using a Rockwell hardness tester.

Fatigue Drop Test

In this test a spool is dropped down from a height of 6.5 feet and the surface appearance of spool is checked. The test is passed if the spool sustains the drop impact test for minimum 50 cycles without any cracking.

Break Down Force (BDF)

In this test the molded component (spool) was fixed in between middle & upper jig fixture of a Universal Testing Machine of Fuel Instruments & Engineers Pvt. Ltd. (Fie group) and force was applied in vertically upward direction. Breakdown force was checked in measurement scale while the spool just breaks. The requirement of BDF for spool is 4000 kgf (~ 40 kN).

Gasoline Effect Test

The molded component (spool) was dipped into gasoline for 3 hrs. This was followed by removal of the component and checking for surface softness (swelling) by scrapping with an sharp edge. If the component gets deformed or large lump of materials get chipped off during the test the product is not passed.

Washing Machine Lid Fatigue Test

The molded component, a lid of a washing machine, was fixed in the assembly 48 hours after molding. Then the lid was subjected to open/close test, 12000 cycles, cycle time: 4sec off/4sec on, and checked for cracking or any other kind of failure. 3 identical samples of each molding composition (runs 1 to 3) were tested to get representative results.

Materials used:

Component (A)

Fine-particle butadiene rubber latex (S-A1)

The fine-particle butadiene rubber latex (S-A1) which is used for the agglomeration step was produced by emulsion polymerization using tert-dodecylmercaptan as chain transfer agent and potassium persulfate as initiator at temperatures from 60° to 80°C. The addition of potassium persulfate marked the beginning of the polymerization. Finally the fine-particle butadiene rubber latex (S-A1) was cooled below 50°C and the non reacted monomers were removed partially under vacuum (200 to 500 mbar) at temperatures below 50°C which defines the end of the polymerization. Then the latex solids (in % per weight) were determined by evaporation of a sample at 180°C for 25 min. in a drying cabinet. The monomer conversion is calculated from the measured latex solids. The butadiene rubber latex (S-A1) is characterized by the following parameters, see table 1.

Latex S-A1-1

No seed latex is used. As emulsifier the potassium salt of a disproportionated rosin (amount of potassium dehydro-abietate: 52 wt.-%, potassium abietate: 0 wt.-%) and as salt tetrasodium pyrophosphate is used.

Table 1: Composition of the butadiene rubber latex S-A1

| Latex | S-A1-1 |
|---|---|
| Monomer butadiene/styrene | 90/10 |
| Seed Latex (wt.-% based on monomers) | ./. |
| Emulsifier (wt.-% based on monomers) | 2.80 |
| Potassium Persulfate (wt.-% based on monomers) | 0.10 |
| Decomposed Potassium Persulfate (parts per 100 parts latex solids) | 0.068 |
| Salt amount (wt.-% based on monomers) | 0.559 |
| Salt amount in percent relative to the weight of solids of the rubber latex (= s) | 0.598 |
| Monomer conversion (%) | 89.3 |
| $D_w$ (nm) | 100 |
| pH | 10.6 |
| Latex solids content (wt.-%) | 42.6 |
| K | 0.91 |

$$K = W * ( 1 - 1.4 * s ) * D_w$$

W = decomposed potassium persulfate [parts per 100 parts rubber]
s = salt amount in percent relative to the weight of solids of the rubber latex
$D_w$ = weight average particle size (= median particle diameter $D_{50}$) of the fine-particle butadiene rubber latex (S-A1)

Production of the coarse-particle, agglomerated butadiene rubber latices (A1)

The production of the coarse-particle, agglomerated butadiene rubber latices (A1) was performed with the specified amounts mentioned in Table 2. The fine-particle butadiene rubber latex (S-A1) was provided first at 25°C and was adjusted if necessary with deionized water to a certain concentration and stirred. To this dispersion an amount of acetic anhydride based on 100 parts of the solids from the fine-particle butadiene rubber latex (S-A1) as fresh produced aqueous mixture with a concentration of 4.58 wt.-% was added and the total mixture was stirred for 60 seconds. After this the agglomeration was carried out for 30 minutes without stirring. Subsequently KOH was added as a 3 to 5 wt.-% aqueous solution to the agglomerated latex and mixed by stirring. After filtration through a 50 μm filter the amount of coagulate as solid mass based on 100 parts solids of the fine-particle butadiene rubber latex (B) was determined. The solid content of the agglomerated butadiene rubber latex (A), the pH value und the median weight particle diameter $D_{50}$ was determined.

Table 2: Production of the coarse-particle, agglomerated butadiene rubber latices (A1)

| latex A1 | | A1-1 | A1-2 |
|---|---|---|---|
| used latex S-A1 | | S-A1-1 | S-A1-1 |
| concentration latex S-A1 before agglomeration | wt.-% | 41 | 41 |
| amount acetic anhydride | parts | 0.88 | 1.22 |
| amount KOH | parts | 1.46 | 2.07 |
| concentration KOH solution | wt.-% | 50 | 50 |
| solid content latex A1 | wt.-% | 30 | 30 |
| coagulume | wt.-% | <0.1% | < 0.1% |
| pH | | 8.7-9.5 | 8.7-9.5 |
| $D_{50}$ | nm | 250 | 550 |

Production of the graft copolymers (A)

59 wt.-parts of mixtures of the coarse-particle, agglomerated butadiene rubber latices A1-1 and A1-2 (ratio 80 : 20, calculated as solids of the rubber latices (A1)) were diluted with water to a solid content of 27.5 wt.-% and heated to 55°C. 51 wt.-parts of a mixture consisting of 67 wt.-parts styrene, 33 wt.-parts acrylonitrile and 0.4 wt.-parts tert-dodecylmercaptan were added in 3 hours 30 minutes. At the same time when the monomer feed started the polymerization was started by feeding 0.15 wt.-parts cumene hydroperoxide together with 0.57 wt.-parts of a potassium salt of disproportionated rosin (amount of potassium dehydroabietate: 52 wt.-%, potassium abietate: 0 wt.-%) as aqueous solution and separately an aqueous solution of 0.22 wt.-parts of glucose, 0.36 wt.-% of tetrasodium pyrophosphate and 0.005 wt.-% of iron-(II)-sulfate within 3 hours 30 minutes.

The temperature was increased from 55 to 75°C within 3 hours 30 minutes after start feeding the monomers. The polymerization was carried out for further 2 hours at 75°C and then the graft rubber latex (= graft copolymer A) was cooled to ambient temperature. The graft rubber latex was stabilized with ca. 0.6 wt.-parts of a phenolic antioxidant and precipitated with sulfuric acid, washed with water and the wet graft powder was dried at 70°C (residual humidity less than 0.5 wt.-%). The obtained product is graft copolymer (A-I).

ABS graft copolymer P-1 ($D_{50}$ particle size (nm) of agglomerated rubber latices: 315/328 nm, graft sheath: 40.5 wt.-%, AN-content of graft sheath: 28 wt.-%, agglomerated with acetic anhydride) used in the comparative examples corresponds to graft rubber polymer I5 as disclosed in WO 2012/022710 A2 (p. 23 to 28) and was prepared accordingly.

Component (B)

(B-I): statistical copolymer from styrene and acrylonitrile with a ratio of polymerized styrene to acrylonitrile of 69:31 with a melt volume flow rate (MVR) at 220°C/10kg of 33 mL/10 minutes and Mw 124000 g/mol (determined by means of Gel Permeation Chromatography in THF using polystyrene standards) produced by free radical solution polymerization.

(B-II): statistical copolymer from styrene and acrylonitrile with a ratio of polymerized styrene to acrylonitrile of 69:31 with a melt volume flow rate (MVR) at 220°C/10kg of 27 mL/10 minutes, and Mw 132000 g/mol (determined by means of Gel Permeation Chromatography in THF using polystyrene standards) produced by free radical solution polymerization.

Component (C)

C-1    ethylene bisstearamide
C-2    polydimethylsiloxane with kinematic viscosity of 1000 cSt

(continued)

| | |
|---|---|
| C-3 | Distearyl pentaerythrol diphosphite |
| C-4 | magnesium stearate |
| C-5 | magnesium oxide |
| C-6 | Carbon black powder from Phillips Carbon Black Limited |

Thermoplastic compositions

Graft rubber polymers (A-I) or (P-1), SAN-copolymers (B-I) or (B-II), and the afore-mentioned components (C) were mixed (ratio see Table 3, batch size 5 kg) for 4 to 5 minutes in a high speed mixer to obtain a uniform premix and then said premix was melt blended in a twin-screw extruder at a speed of 80 rpm and at using an incremental temperature profile from 190° C to 220° C for the different barrel zones. The extruded strands were cooled in a water bath, air-dried and pelletized. Standard test specimens (ISO test bars) of the obtained blend were injection moulded. The temperature profile of the injection moulding machine barrel was 190 to 230°C.
The test results are presented in Tables 4 to 6.

Table 3: ABS Molding composition

| Components wt.-% | Cp. Ex. 1 | Ex. 1 | Cp. Ex. 2 | Ex. 2 |
|---|---|---|---|---|
| P-1 | 34.23 | | 22.75 | |
| A-1 | | 39.12 | | 25.00 |
| B - 1 | 63.57 | 58.68 | | 71.15 |
| B - 2 | | | 72.04 | |
| Additives | | | | |
| C-1 | 1.47 | 1.47 | 1.42 | 1.73 |
| C-2 | 0.15 | 0.15 | 0.14 | 0.14 |
| C-3 | 0.20 | 0.20 | 0.14 | 0.14 |
| C-4 | 0.29 | 0.29 | 0.28 | 0.29 |
| C-5 | 0.10 | 0.10 | 0.09 | 0.10 |
| C-6 | | | 3.13 | 1.44 |

Table 4:

| Typical properties | | Standard | Unit | Cp. Ex. 1 | Ex. 1 | Cp. Ex. 2 | Ex. 2 |
|---|---|---|---|---|---|---|---|
| % Composition by FTIR | AN | Test method | % | 23.5 | 23.7 | 26.2 | 25.8 |
| | BD | | % | 17.89 | 17.77 | 11.5 | 13 |
| | STY | | % | 58.61 | 58.53 | 62.3 | 61.2 |
| MFI, 220°C, 10 kg load | | ISO 1133 | g/10 min | 13 | 11.2 | 17.5 | 19 |
| NIIS, 1/4", 23 °C, | | ASTM D 256 | kg.cm/cm | 39 | 37.1 | 24 | 16.5 |
| NIIS, 1/8", 23 °C, | | ASTM D 256 | kg.cm/cm | 50.5 | 55 | 36 | 28 |
| Tensile strength at yield, 50 mm/min, | | ASTM D 638 | kg/cm$^2$ | 460 | 461.2 | 530 | 566 |
| Tensile Modulus, 50 mm / min, | | ASTM D 638 | kg/cm$^2$ | 25300 | 24492 | 31000 | 30000 |
| Elongation at Break, 50 mm / min, | | ASTM D 638 | % | 19 | 33 | 19 | 22.9 |
| Flexural Strength, 5 mm / min, | | ASTM D 790 | kg/cm$^2$ | 750 | 759 | 900 | 944 |
| Flexural Modulus, 5 mm / min, | | ASTM D 790 | kg/cm$^2$ | 24500 | 24523 | 30300 | 31332 |

(continued)

| Typical properties | | Standard | Unit | Cp. Ex. 1 | Ex. 1 | Cp. Ex. 2 | Ex. 2 |
|---|---|---|---|---|---|---|---|
| Density | | ISO 1183 | g/cm$^3$ | 1.045 | 1.044 | 1.046 | 1.045 |
| Rockwell hardness, 23°C | | ASTM D 785 | R-scale | 106 | 105 | 111 | 113 |
| Vicat softening temperature | | ASTM D1525, B-50 N | °C | 100 | 100 | 102 | 103 |
| HDT, annealed 80 °C / 4 hrs | | ASTM D 648, 1.80 mpa | °C | 96 | 97 | 97 | 95 |
| NIIS = Izod notched impact strength | | | | | | | |

Table 5:

| Fatigue test and special tests of the molding compositions | | | |
|---|---|---|---|
| | Number of cycles | | |
| Test | standard | Ex. 1 | Cp. Ex 1 |
| Drop test | 50 | 58 | 37-40 |
| Breakdown force test [kN] | 40.0 | 40.2 | 37.5 |
| chemical resistance in gasoline | no surface defect for 3 hours | passes | fails |
| standard = required properties | | | |

Table 6:

| Open/close fatigue test of washing machine lids | | | |
|---|---|---|---|
| sample | number of cycles before failure of molding composition | | |
| | Run 1 | Run 2 | Run 3 |
| Cp. Ex. 1 | 4300 | 4200 | 4300 |
| Ex. 1 | 15000 | 10300 | 12000 |
| Cp. Ex. 2 | 7000 | 7000 | 7000 |
| Ex. 2 | 11000 | 12000 | 16000 |

The molding compositions according to the invention (see examples 1 and 2) exhibit an excellent fatigue resistance as shown by their elongation at break (Table 4), their drop test (cp. Tables 5 and 6) and open/close test of the washing machine lid.

Moreover, the presented data indicate that the molding compositions described have well-balanced properties, in respect to their key mechanical properties, chemical resistance, ductility and melt flow.

**Claims**

1. Thermoplastic molding composition comprising components A, B and C

   (A) 25 to 45 wt.-%, preferably 30 to 45 wt.-%, of a graft copolymer (A) consisting of:

   50.5 to 55 wt.-% of a graft sheath (A2) and
   45 to 49.5 wt of a graft substrate (A1) - a mixture of agglomerated butadiene rubber latices (A1') and (A1")
   -, where (A1) and (A2) sum up to 100 wt.-%,
   obtained by emulsion polymerization of
   styrene and acrylonitrile in a weight ratio of 69.5/30.5 to 66/34 to obtain a graft sheath (A2), it being possible for styrene and/or acrylonitrile to be replaced partially (less than 50 wt.-%) by alpha-methylstyrene, methyl methacrylate or N-phenylmaleimide or mixtures thereof,
in the presence of at least one agglomerated butadiene rubber latex (A1') with a median weight particle diameter $D_{50}$ from 150 to 350 nm, and at least one agglomerated butadiene rubber latex (A1") with a median weight particle diameter $D_{50}$ of 425 to 650 nm,
where the agglomerated rubber latices (A1') and (A1") are obtained by agglomeration of at least one starting butadiene rubber latex (S-A1) having a median weight particle diameter $D_{50}$ of equal to or less than 120 nm, preferably equal to or less than 110 nm, with at least one acid anhydride, preferably acetic anhydride or mixtures of acetic anhydride with acetic acid, in particular acetic anhydride;

(B) 55 to 75 wt.-%, preferably 55 to 70 wt.-%, of at least one copolymer (B) of styrene and acrylonitrile in a weight ratio of from 70/30 to 66/34, it being possible for styrene and/or acrylonitrile to be partially (less than 50 wt.-%) replaced by alpha-methylstyrene, methyl methacrylate or N-phenylmaleimide or mixtures thereof; wherein copolymer (B) has a melt flow rate of 30 to 36 g/10 min (220°C/10 kg);
(C) 0 to 5 wt.-% of further additives and/or processing aids (C);
where the components A, B and, if present, C, sum to 100 wt.-%.

2. Thermoplastic molding composition according to claim 1 comprising:

   25 to 45 wt.-% component (A),
   54.99 to 74.99 wt.-% component (B),
   0.01 to 5 wt.-% component (C).

3. Thermoplastic molding composition according to claim 1 or 2 comprising:

   30 to 45 wt.-% component (A),
   54.99 to 69.99 wt.-% component (B),
   0.01 to 5 wt.-% component (C).

4. Thermoplastic molding composition according to any of claims 1 to 3, wherein graft copolymer (A) consists of:

   51 to 54 wt.-% of a graft sheath (A2) and
   46 to 49 wt.-% of a graft substrate (A1).

5. Thermoplastic molding composition according to any of claims 1 to 4, wherein the graft sheath (A2) is obtained by emulsion polymerization of styrene and acrylonitrile in a weight ratio of 69/31 to 67/33, preferably 69/31 to 67.5/32.5.

6. Thermoplastic molding composition according to any of claims 1 to 5, wherein the agglomerated butadiene rubber latex (A1') has a median weight particle diameter $D_{50}$ from 200 to 300 nm, preferably 200 to 270 nm, and the at least one agglomerated butadiene rubber latex (A1") has a median weight particle diameter $D_{50}$ of 450 to 600 nm, preferably 450 to 550 nm.

7. Thermoplastic molding composition according to any of claims 1 to 6, wherein the weight ratio of the agglomerated butadiene rubber latices (A1') and (A1") is 50/50 to 90/10, preferably 70/30 to 85/15.

8. Thermoplastic molding composition according to any of claims 1 to 7, where in copolymer (B) the weight ratio of styrene and acrylonitrile is 69.5/30.5 to 67/33, preferably 69/31 to 67.5/32.5.

9. Thermoplastic molding composition according to any of claims 1 to 8, wherein copolymer (B) has a melt flow rate of 31 to 35 g/10 min (220°C/10 kg).

10. Thermoplastic molding composition according to any of claims 1 to 9, wherein the graft sheath (A2) and copolymer (B) consist of polymerized units of styrene and acrylonitrile.

11. Process for the preparation of the thermoplastic molding composition according to any of claims 1 to 10 by melt mixing the components (A), (B), and, if present (C), and optionally further polymers (TP) at temperatures in the range of from 160°C to 400°C.

12. Shaped articles produced by thermoforming, extruding, injection molding, calendaring, blow molding, compression molding, press sintering, deep drawing or sintering of the thermoplastic molding composition according to any of claims 1 to 10.

13. Use of the thermoplastic molding composition according to any of claims 1 to 10 for applications demanding high endurance under cyclic (static or dynamic) loading conditions.

14. Use of the thermoplastic molding composition according to any of claims 1 to 10 for the production of spools such as textile bobbins, automotive components under load and home appliances vibrating due to moving parts such as washing- or dryer machine lids.


**Patentansprüche**

1. Thermoplastische Formmasse enthaltend Komponenten A, B und C

   (A) 25 bis 45 Gew.-%, vorzugsweise 30 bis 45 Gew.-%, eines Pfropfcopolymers (A) bestehend aus:

      50,5 bis 55 Gew.-% einer Pfropfhülle (A2) und
      45 bis 49,5 Gew.-% eines Pfropfsubstrats (A1) - einer Mischung aus agglomerierten Butadien-Kautschuk-Latices (A1') und (A1") -, wobei (A1) und (A2) sich auf 100 Gew.-% summieren,
      erhalten durch Emulsionspolymerisation von
      Styrol und Acrylnitril in einem Gewichtsverhältnis von 69,5/30,5 bis 66/34, um eine Pfropfhülle (A2) zu erhalten, wobei es möglich ist, Styrol und/oder Acrylnitril teilweise (weniger als 50 Gew.-%) durch alpha-Methylstyrol, Methylmethacrylat oder N-Phenylmaleimid oder Mischungen davon zu ersetzen,
      in Gegenwart von mindestens einem agglomerierten Butadienkautschuklatex (A1') mit einem gewichtsmittleren Teilchendurchmesser D50 von 150 bis 350 nm und mindestens eines agglomerierten Butadienkautschuklatex (A1") mit einem gewichtsmittleren Teilchendurchmesser D50 von 425 bis 650 nm,
      wobei die agglomerierten Kautschuklatices (A1') und (A1") durch Agglomeration mindestens eines Ausgangs-Butadienkautschuklatex (S-A1) mit einem gewichtsmittleren Teilchendurchmesser D50 von gleich oder kleiner als 120 nm, vorzugsweise gleich oder kleiner als 110 nm, mit mindestens einem Säureanhydrid, vorzugsweise Essigsäureanhydrid oder Mischungen von Essigsäureanhydrid mit Essigsäure, insbesondere Essigsäureanhydrid, erhalten werden;

   (B) 55 bis 75 Gew.-%, vorzugsweise 55 bis 70 Gew.-%, mindestens eines Copolymers (B) aus Styrol und Acrylnitril in einem Gewichtsverhältnis von 70/30 bis 66/34, wobei es möglich ist, Styrol und/oder Acrylnitril teilweise (weniger als 50 Gew.-%) durch alpha-Methylstyrol, Methylmethacrylat oder N-Phenylmaleimid oder Mischungen davon zu ersetzen; wobei Copolymer (B) eine Schmelzflussrate von 30 bis 36 g/10 min (220°C/10 kg) aufweist;
   (C) 0 bis 5 Gew.-% weiterer Additive und/oder Verarbeitungshilfsmittel (C);
   wobei sich die Komponenten A, B und, falls vorhanden, C auf 100 Gew.-% summieren.

2. Thermoplastische Formmasse gemäß Anspruch 1, enthaltend:

   25 bis 45 Gew.-% Komponente (A),
   54,99 bis 74,99 Gew.-% Komponente (B),
   0,01 bis 5 Gew.-% Komponente (C).

3. Thermoplastische Formmasse gemäß Anspruch 1 oder 2, enthaltend:

   30 bis 45 Gew.-% Komponente (A),
   54,99 bis 69,99 Gew.-% Komponente (B),
   0,01 bis 5 Gew.-% Komponente (C).

4. Thermoplastische Formmasse gemäß einem der Ansprüche 1 bis 3, wobei Pfropfcopolymer (A) besteht aus:

   51 bis 54 Gew.-% einer Pfropfhülle (A2) und
   46 bis 49 Gew.-% eines Pfropfsubstrats (A1).

**5.** Thermoplastische Formmasse gemäß einem der Ansprüche 1 bis 4, wobei Pfropfhülle (A2) durch Emulsionspolymerisation von Styrol und Acrylnitril in einem Gewichtsverhältnis von 69/31 bis 67/33, vorzugsweise 69/31 bis 67,5/32,5, erhalten wird.

**6.** Thermoplastische Formmasse gemäß einem der Ansprüche 1 bis 5, wobei der agglomerierte Butadienkautschuklatex (A1') einen gewichtsmittleren Teilchendurchmesser D50 von 200 bis 300 nm, vorzugsweise 200 bis 270 nm, und der mindestens eine agglomerierte Butadienkautschuklatex (A1") einen gewichtsmittleren Teilchendurchmesser D50 von 450 bis 600 nm, vorzugsweise 450 bis 550 nm, aufweist.

**7.** Thermoplastische Formmasse gemäß einem der Ansprüche 1 bis 6, wobei das Gewichtsverhältnis der agglomerierten Butadienkautschuklatices (A1') und (A1") 50/50 bis 90/10, vorzugsweise 70/30 bis 85/15, beträgt.

**8.** Thermoplastische Formmasse gemäß einem der Ansprüche 1 bis 7, wobei im Copolymer (B) das Gewichtsverhältnis von Styrol und Acrylnitril 69,5/30,5 bis 67/33, vorzugsweise 69/31 bis 67,5/32,5, beträgt.

**9.** Thermoplastische Formmasse gemäß einem der Ansprüche 1 bis 8, wobei Copolymer (B) eine Schmelzflussrate von 31 bis 35 g/10 min (220°C/10 kg) aufweist.

**10.** Thermoplastische Formmasse gemäß einem der Ansprüche 1 bis 9, wobei die Pfropfhülle (A2) und das Copolymer (B) aus polymerisierten Einheiten von Styrol und Acrylnitril bestehen.

**11.** Verfahren zur Herstellung der thermoplastischen Formmasse gemäß einem der Ansprüche 1 bis 10 durch Mischen der Komponenten (A), (B) und, falls vorhanden, (C) und gegebenenfalls weiterer Polymere (TP) in der Schmelze bei Temperaturen im Bereich von 160°C bis 400°C.

**12.** Formkörper, hergestellt durch Thermoformen, Extrudieren, Spritzgießen, Kalandrieren, Blasformen, Formpressen, Presssintern, Tiefziehen oder Sintern der thermoplastischen Formmasse gemäß einem der Ansprüche 1 bis 10.

**13.** Verwendung der thermoplastischen Formmasse gemäß einem der Ansprüche 1 bis 10 für Anwendungen, die eine hohe Beständigkeit unter cyclischen (statischen oder dynamischen) Belastungsbedingungen erfordern.

**14.** Verwendung der thermoplastischen Formmasse gemäß einem der Ansprüche 1 bis 10 zur Herstellung von Spulen, wie z. B. Textilspulen, von Kraftfahrzeugteilen unter Last, und von Haushaltsgeräten, die durch bewegliche Teile vibrieren, wie z. B. Waschmaschinen- oder Trocknerdeckel.

**Revendications**

**1.** Composition pour moulage thermoplastique comprenant les composants A, B et C

(A) 25 à 45% en poids, de préférence 30 à 45% en poids, d copolymère greffé (A) consistant en :

50,5 à 55 % en poids d'une gaine de greffage (A2) et
45 à 49,5 % en poids d'un substrat de greffage (A1) - un mélange de latex de caoutchouc butadiène aggloméré (A1') et (A1") -, où (A1) et (A2) totalisent jusqu'à 100 % en poids,
obtenu par polymérisation en émulsion de
styrène et acrylonitrile dans un rapport pondéral de 69,5/30,5 à 66/34 pour obtenir une gaine de greffage (A2), le styrène et/ou l'acrylonitrile pouvant être partiellement remplacés (pour moins de 50 % en poids) par l'alpha-méthyl styrène, le méthacrylate de méthyle ou le N-phényl-maléimide ou leurs mélanges,
en présence d'au moins un latex de caoutchouc butadiène aggloméré (A1') présentant un diamètre des particules de poids médian $D_{50}$ de 150 à 350 nm, et d'au moins un latex de caoutchouc butadiène aggloméré (A1') présentant un diamètre des particules de poids médian $D_{50}$ de 425 à 650 nm,
où les latex de caoutchouc agglomérés (A1') et (A1") sont obtenus par agglomération d'au moins un latex de caoutchouc de butadiène de départ (S-Al) présentant un diamètre des particules de poids médian $D_{50}$ égal ou inférieur à 120 nm, de préférence égal ou inférieur à 110 nm, avec au moins un anhydride d'acide, de préférence l'anhydride acétique ou des mélanges d'anhydride acétique avec l'acide acétique, notamment l'anhydride acétique ;

(B) 55 à 75% en poids, de préférence 55 à 70% en poids, d'au moins un copolymère de styrène et d'acrylonitrile (B) dans un rapport pondéral de 70/30 à 66/34, le styrène et/ou l'acrylonitrile pouvant être partiellement remplacés (pour moins de 50 % en poids) par l'alpha-méthylstyrène, le méthacrylate de méthyle ou le N-phénylmaléimide ou leurs mélanges, dans lequel le copolymère (B) a un indice de fluidité de 30 à 36 g/10 min (220°C/10 kg) ;
(C) 0 à 5 % en poids d'autres additifs et/ou adjuvants de fabrication (C) ;
où les composants A, B et C s'il est présent, totalisent 100 % en poids.

2. Composition pour moulage thermoplastique selon la revendication 1, comprenant 25 à 45 % en poids de composant (A),

54,99 à 74,99 % en poids de composant (B),
0,01 à 5 % en poids de composant (C).

3. Composition pour moulage thermoplastique selon la revendication 1 ou 2, comprenant

30 à 45 % en poids de composant (A),
54,99 à 69,99 % en poids de composant (B),
0,01 à 5 % en poids de composant (C).

4. Composition pour moulage thermoplastique selon l'une quelconque des revendications 1 à 3, dans laquelle le copolymère greffé (A) est constitué de :51 à 54 % en poids d'une gaine de greffage (A2) et 46 à 49 % en poids d'un substrat de greffage (A1).

5. Composition pour moulage thermoplastique selon l'une quelconque des revendications 1 à 4, dans laquelle la gaine de greffage (A2) est obtenue par polymérisation en émulsion de styrène et d'acrylonitrile dans un rapport pondéral de 69/31 à 67/33, de préférence de 69/31 à 67,5/32,5.

6. Composition pour moulage thermoplastique selon l'une quelconque des revendications 1 à 5, dans laquelle le latex de caoutchouc butadiène aggloméré (A1') présente un diamètre de particules de poids médian $D_{50}$ de 200 à 300 nm, de préférence de 200 à 270 nm, et le au moins un latex de caoutchouc butadiène aggloméré (A1") présente un diamètre de particules de poids médian $D_{50}$ de 450 à 600 nm, de préférence de 450 à 550 nm.

7. Composition pour moulage thermoplastique selon l'une quelconque des revendications 1 à 6, dans laquelle le rapport pondéral des latex de caoutchouc butadiène agglomérés (A1') et (A1") est de 50/50 à 90/10, de préférence de 70/30 à 85/15.

8. Composition pour moulage thermoplastique selon l'une quelconque des revendications 1 à 7, dans laquelle, dans le copolymère (B), le rapport pondéral styrène/acrylonitrile est de 69,5/30,5 à 67/33, de préférence de 69/31 à 67,5/32,5.

9. Composition pour moulage thermoplastique selon l'une quelconque des revendications 1 à 8, dans laquelle le copolymère (B) a un indice de fluage de 31 à 35 g/10 min (220°C/10 kg).

10. Composition pour moulage thermoplastique selon l'une quelconque des revendications 1 à 9, dans laquelle la gaine de greffage (A2) et le copolymère (B) sont constitués d'unités polymérisées de styrène et d'acrylonitrile.

11. Procédé de préparation de la composition pour moulage thermoplastique selon l'une quelconque des revendications 1 à 10 par mélange à l'état fondu des composants (A), (B) et, s'ils sont présents (C), et éventuellement d'autres polymères (TP) à des températures dans la gamme de 160°C à 400°C.

12. Articles façonnés produits par thermoformage, extrusion, moulage par injection, calandrage, moulage par soufflage, moulage par compression, frittage à la presse, emboutissage profond ou frittage de la composition pour moulage thermoplastique selon l'une quelconque des revendications 1 à 10.

13. Utilisation de la composition pour moulage thermoplastique selon l'une quelconque des revendications 1 à 10, pour des applications exigeant une endurance élevée dans des conditions de chargement cycliques (statiques ou dynamiques).

**14.** Utilisation de la composition de moulage thermoplastique selon l'une quelconque des revendications 1 à 10, pour la production de bobines, telles des bobines textiles, des composants automobiles sous charge et des appareils électroménagers vibrant du fait de pièces mobiles, telles que des couvercles de machine à laver ou à sécher.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3121069 A
- US 2924545 A
- US 6362269 B
- WO 2007032901 A
- WO 2017093468 A1
- WO 2014170406 A
- WO 2014170407 A

- WO 2012022710 A
- EP 0391178 A
- WO 2012022710 A1
- DE 2420358 A
- DE 2724360 A
- DE 19907136 A
- WO 2012022710 A2

**Non-patent literature cited in the description**

- **G. LAGALY ; O. SCHULZ ; R. ZIEMEHL.** Dispersionen und Emulsionen: Einführung in die Kolloidik feinverteilter Stoffe einschließlich der Tonminerale. Steinkopf-Verlag, 1997, 282
- **HOUBEN-WEYL.** Methoden der Organischen Chemie, Makromolekulare Stoffe. Thieme Verlag, 1961, 307

- Polystyrol [Polystyrene. **VIEWEG-DAUMILLER.** Kunststoff-Handbuch ([Plastics Handbook. Carl-Hanser-Verlag, 1969, vol. V, 122
- Plastics Additives Handbook. Hanser Publ, 1996